# EUROPEAN PATENT SPECIFICATION

(11) **EP 3 017 983 B1**
(45) Date of publication and mention of the grant of the patent: **26.04.2017**
(21) Application number: 15189767.5
(22) Date of filing: 14.10.2015
(51) Int. Cl.: B60H 1/34, B60H 1/00, F24F 13/08, F24F 13/06

(54) **AIR BLOWING DEVICE**
LUFTAUSBLASVORRICHTUNG
DISPOSITIF DE SOUFFLAGE D'AIR

(30) Priority: 31.10.2014 JP 2014222601
(43) Date of publication of application: 11.05.2016
(73) Proprietor: Howa Plastics Co., Ltd., Aichi 470-0496 (JP); Toyota Jidosha Kabushiki Kaisha, Toyota-shi, Aichi 471-8571 (JP)
(72) Inventor: YAMAMOTO, Masaaki, Toyota-shi, Aichi 470-0496 (JP); KANEDA, Kentaro, Toyota-shi, Aichi 470-0496 (JP); UNO, Hidenori, Toyota-shi, Aichi 471-8571 (JP)
(74) Representative: Ettmayr, Andreas

(56) References cited:
- EP-A1- 1 920 955
- EP-A2- 2 090 449
- DE-C1- 4 334 535
- JP-A- 2003 276 431
- JP-A- 2004 026 038

## Description

### BACKGROUND OF THE INVENTION

### 1. Field of the Invention

The present invention relates to an air blowing device including a tubular body defining an airflow passage and an air outlet, a guide wall for guiding an airflow having passed through the air outlet in an intended direction, and an on-off valve forming a part of the guide wall, which is capable of opening or closing a concave portion formed in the guide wall.

### 2. Description of the Related Art

Hitherto, there has been proposed an air blowing device for supplying cooling or heating air to a vehicle cabin of an automobile or the like. In general, this type of air blowing device is capable of adjusting a flow direction of an airflow or the like blown from the air blowing device (hereinafter referred to as "blowing airflow").

One of the related-art air blowing devices (hereinafter referred to as "related-art device") includes a housing defining an airflow passage and an air outlet, and an upstream-side fin and a downstream-side fin for adjusting the flow direction of the blowing airflow. The airflow passage of the related-art device has a unique sectional shape, in which convex portions each having a triangular shape in cross section protrude in the vicinity of the air outlet inside the same flow passage. The airflow, which is primarily rectified by the upstream-side fin and the downstream-side fin, is secondarily rectified due to the sectional shape. With this multi-level rectification, the related-art device is capable of accurately adjusting the flow direction of the blowing airflow even when the air outlet has such a narrow shape as a rectangle that is short in a vertical direction and long in a horizontal direction as disclosed in Japanese Patent Application Laid-open No. 2014-91376.

The related-art device realizes the narrower air outlet while maintaining the function to adjust the flow direction of the blowing airflow. On the other hand, from the viewpoint of further enhancing the appearance of an interior of the automobile and the like, it is desired to keep the air outlet invisible to the extent possible by arranging the air outlet at a position less likely to be visually recognized by a user of the automobile or the like as well as narrowing the air outlet so that the air outlet is less likely to be recognized.

For example, as an example of keeping the air outlet invisible, it is conceivable to arrange a mask in the vicinity of the air outlet, for blocking a line of sight of the user or the like. However, when the mask is inadvertently arranged in the vicinity of the air outlet of the related-art device, the flow direction of the blowing airflow may be changed to an unintended direction due to the mask though the air outlet may be kept invisible. That is, when the air outlet is kept invisible, the function of the related-art device to adjust the flow direction of the blowing airflow may be impaired. As described above, it is not easy to keep the air outlet invisible while maintaining the function as the air blowing device.

A further known air blowing device is disclosed in DE 43 34 535 C1, which is considered as the closest prior art.

### SUMMARY OF THE INVENTION

The present invention has been made in view of the above-mentioned problems, and provides an air blowing device capable of keeping an air outlet invisible to the extent possible without impairing a function as the air blowing device.

In order to solve the above-mentioned problems, according to one embodiment of the present invention, there is provided an air blowing device, including: a tubular body defining an airflow passage and an air outlet; a "guide wall" for guiding an airflow having passed through the air outlet in an intended direction; and an "on-off valve" forming a part of the guide wall, which is capable of opening or closing the concave portion formed in the guide wall.

Specifically, the guide wall has a "convex surface shape" protruding in a direction intersecting with a forward direction of the air outlet, and is arranged so that a projection image, which is obtained by projecting the guide wall onto an imaginary plane including the air outlet, "covers the entire air outlet."

Further, the on-off valve is configured to open or close the concave portion in accordance with the intended direction.

According to the above-mentioned structure, the guide wall of the air blowing device has the above-mentioned "convex surface shape" and "arrangement," and hence, when a user of an automobile or the like views the air blowing device from the "front side of the air outlet," a line of sight of the user or the like is blocked by the "guide wall" so that the air outlet is not visually recognized by the user or the like. Further, when the "on-off valve opens or closes the concave portion formed in the guide wall" in consideration of the "intended direction" of the blowing airflow, a position at which the airflow is separated from the guide wall (hereinafter referred to as "separating position") is adjusted so that the blowing airflow is guided in the "intended direction."

The above-mentioned features according to the one embodiment of the present invention are described in detail below.

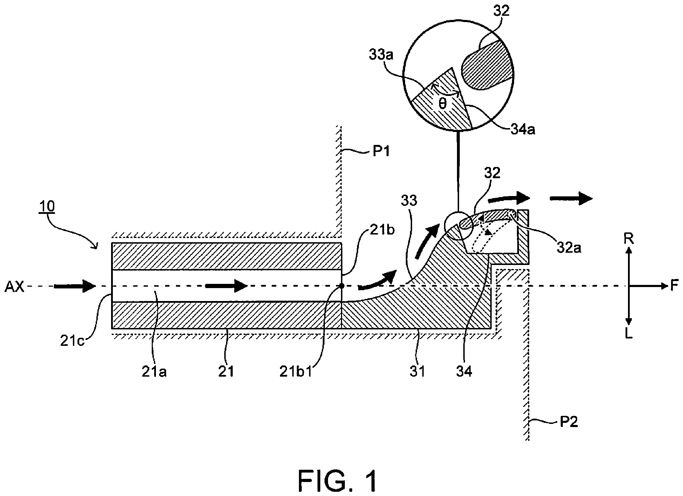

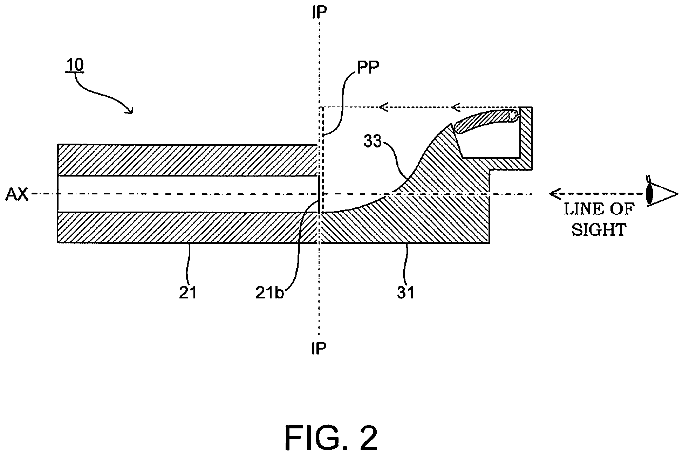

The guide wall according to the one embodiment of the present invention is formed on a downstream side with respect to the air outlet to "guide the airflow having passed through the air outlet in the intended direction." The guide wall has the "convex surface shape protruding in the direction intersecting with the forward direction of the air outlet." The guide wall is arranged so that the "projection image, which is obtained by projecting the convex surface (curved surface having a convex shape) of the guide wall onto the imaginary plane including the air outlet," covers the "entire air outlet" as illustrated in, for example, FIG. 1 and FIG. 2. As a result, when the user or the like views the air blowing device along the projection direction (that is, from the front side of the air outlet), the air outlet is hidden by the guide wall so that the air outlet is not visually recognized by the user or the like.

On the other hand, the "airflow having passed through the air outlet" is caused to flow along the guide wall in a manner of adhering to the surface (curved surface having a convex shape) of the guide wall. This is because, when an object is present in the vicinity of a fluid having viscosity, an effect of curving a flow of the fluid along a surface of the object (Coanda effect) is generated. When the on-off valve "opens" the "concave portion formed in the guide wall" while the airflow is caused to flow as described above, the airflow faces the concave portion. At this time, an adhesive force obtained by the Coanda effect is lost in the concave portion due to the increase in distance between the airflow and the surface of the guide wall, such as a bottom of the concave portion, or the like. As a result, the airflow is separated from the guide wall in the concave portion. On the other hand, when the on-off valve "closes" the concave portion, the airflow is caused to flow along a surface of the on-off valve "forming a part of the guide wall" (that is, the surface of the guide wall) without facing the concave portion. Accordingly, unlike the above-mentioned case, the adhesive force obtained by the Coanda effect is not lost. As a result, the airflow is not separated in the concave portion. Note that, when the concave portion is closed, the airflow is separated at a predetermined position on the downstream side with respect to the concave portion, such as a distal end portion of the guide wall. As described above, when the on-off valve "opens or closes the concave portion formed in the guide wall," the separating position of the airflow is changed.

In general, the airflow separated from the guide wall is caused to flow in a direction along a tangential plane of the guide wall (hereinafter referred to as "tangential plane direction") at the separating position. In other words, the flow direction of the blowing airflow can be adjusted by changing the separating position. Specifically, through the change of the separating position with the use of the on-off valve as described above, the flow direction of the blowing airflow can be switched between a "tangential plane direction of the guide wall at a position at which the concave portion is formed" and a "tangential plane direction of the guide wall at the predetermined position on the downstream side with respect to the concave portion (separating position determined depending on the shape of the guide wall)". Accordingly, when the "intended direction" is the former direction, the concave portion is "opened," and when the "intended direction" is the latter direction, the concave portion is "closed." In this manner, the flow direction of the blowing airflow can be matched with the intended direction. That is, the flow direction of the blowing airflow can be adjusted through the operation of the on-off valve "in accordance with the intended direction."

In addition, the air blowing device according to the one embodiment of the present invention can keep the air outlet invisible to the extent possible without impairing the function as the air blowing device to adjust the flow direction of the blowing airflow.

Further, the air blowing device according to the one embodiment of the present invention does not require an airflow direction adjustment mechanism such as a fin unlike the related-art device, and hence the air outlet can also be further narrowed as compared to that in the related-art device. In addition, not only the air outlet but also the air blowing device itself may be less likely to be recognized by the user or the like with the use of the air blowing device according to the one embodiment of the present invention, in particular, the guide wall as a part of another interior component of the automobile, such as a frame for fixing a display of a car navigation system or the like. In this manner, the appearance of an interior of the automobile and the like can also be further enhanced.

Incidentally, the above-mentioned "air outlet" corresponds to an "opening end of the airflow passage (end portion of a hollow portion inside the tubular body on the downstream side)," and is formed on an upstream side with respect to the guide wall. From the viewpoint of leading the airflow having passed through the air outlet to the guide wall while preventing stagnation to the extent possible, it is preferred that a distance between the air outlet and an end portion of the guide wall on the upstream side be as small as possible, and further preferred that the air outlet and the end portion of the guide wall be located at the same position.

The above-mentioned "forward direction of the air outlet" corresponds to an "extending direction of a straight line passing through a center of an opening plane of the air outlet so as to be orthogonal to the opening plane." The forward direction of the air outlet may also be expressed as, for example, a direction in which the airflow having passed through the air outlet is caused to flow straight, or as an axial direction of the airflow passage.

The above-mentioned "imaginary plane including the air outlet" corresponds to an "imaginary plane on which the opening plane of the air outlet is to be present." The imaginary plane including the air outlet may also be expressed as, for example, a plane obtained by expanding the opening plane of the air outlet to a periphery thereof.

The structure and effects of the air blowing device according to the one embodiment of the present invention are described above. Next, some aspects (Aspects 1 and 2) of the air blowing device according to the one embodiment of the present invention are described below.

### ·Aspect 1

In the air blowing device according to the one embodiment of the present invention, the shape of the concave portion, the position at which the concave portion is formed, the number of the concave portions, and the like only need to be determined in consideration of adjustment performance for the blowing airflow, which is required in the air blowing device, or the like, and is not particularly limited.

For example, when the distance between the airflow and the surface of the guide wall is sharply increased in the opened concave portion, the airflow can more reliably be separated from the guide wall in the concave portion as compared to the case where the distance is gently increased.

In view of the above, in the air blowing device according to Aspect 1, an angle formed between a surface of the guide wall, which is formed on an upstream side with respect to the concave portion and adjacent to the concave portion, and a side surface of the concave portion, which is adjacent to the surface of the guide wall, may be "a right angle or an acute angle."

Incidentally, the guide wall has the convex surface shape, and hence, in a strict sense, the "surface of the guide wall" is not a flat surface but a curved surface (curved surface having a convex shape). Further, the "side surface of the concave portion" has a surface shape in conformity with the shape of the concave portion, and hence is not necessarily a flat surface. However, in the viewpoint of discussing separability of the airflow in the concave portion, curvatures of the surfaces may be ignored. That is, in the air blowing device of Aspect 1, the "surface of the guide wall" and the "side surface of the concave portion" may be each regarded as a flat surface to determine the above-mentioned "angle."

Note that, the above-mentioned "angle" may also be expressed as an angle formed between the "tangential plane of the surface of the guide wall, which is formed on the upstream side with respect to the concave portion and adjacent to the concave portion," and the "tangential plane of the side surface of the concave portion, which is adjacent to the surface of the guide wall."

### ·Aspect 2

Further, for example, with the plurality of concave portions formed in the guide wall along the flow direction of the airflow, the separating position of the airflow can be changed in multiple levels as compared to the case where a single concave portion is formed in the guide wall. As a result, the flow direction of the blowing airflow can more precisely be adjusted.

In view of the above, in the air blowing device according to Aspect 2, a plurality of concave portions may be formed in the guide wall along a flow direction of the airflow, and a plurality of on-off valves capable of opening or closing the plurality of concave portions independently of each other may be formed.

### BRIEF DESCRIPTION OF THE DRAWINGS

FIG. 1 is a sectional view for illustrating an air blowing device according to an embodiment of the present invention.
FIG. 2 is a sectional view for illustrating the air blowing device according to the embodiment of the present invention.
FIG. 3 is a schematic view for illustrating a relationship between a pivot angle of an on-off valve, a separating position of an airflow, and a flow direction of the blowing airflow.
FIG. 4 is a schematic view for illustrating a relationship between a pivot angle of the on-off valve, a separating position of the airflow, and a flow direction of the blowing airflow.
FIG. 5 is a sectional view for illustrating an example of an air blowing device according to another embodiment of the present invention.

### DETAILED DESCRIPTION OF THE PREFERRED EMBODIMENTS

Now, an air blowing device according to embodiments of the present invention is described referring to the drawings.

### <Overview of Device>

FIG. 1 is an illustration of a schematic configuration of an air blowing device 10 according to an embodiment of the present invention (hereinafter referred to as "embodiment device 10"). The embodiment device 10 is installed on an instrument panel of an automobile so as to be interposed between a peripheral component P1 and a peripheral component P2. Note that, in this embodiment, the peripheral component P1 is a housing of the instrument panel, and the peripheral component P2 is an exterior portion of a display of a car navigation system.

Specifically, the embodiment device 10 includes a hollow columnar portion for allowing an airflow to pass therethrough (tubular body 21 described later), and a shelf-like portion, i.e. a rising portion like a continental slope adjacent to a continental shelf, for allowing the airflow to be guided along a curved wall surface (guide wall 31 described later). FIG. 1 is a schematic sectional view for illustrating the embodiment device 10 when the embodiment device 10 is cut along a plane parallel to an axial line AX of the embodiment device 10 in a lateral direction (in a direction from a right side R to a left side L described later). In other words, FIG. 1 is a schematic sectional view for illustrating the embodiment device 10 when the embodiment device 10 is viewed from above.

For the sake of convenience, a direction toward a front side of the embodiment device 10 along the axial line AX is hereinafter referred to as "forward direction F," and directions orthogonal to the forward direction F toward right and left sides of the embodiment device 10 are hereinafter referred to as "rightward direction R" and "leftward direction L," respectively. Note that, the rightward and leftward directions are defined based on rightward and leftward directions when a user of the automobile views the embodiment device 10 mounted on a periphery of a dashboard of the automobile or the like.

As illustrated in FIG. 1, the embodiment device 10 includes the tubular body 21 and the guide wall 31 including an on-off valve 32 forming a part of the guide wall 31. Now, structures of those members are described in more detail.

The tubular body 21 defines an airflow passage 21a thereinside and an air outlet 21 b in an end portion thereof in the forward direction F. Note that, the tubular body 21 is a tubular body having a substantially rectangular parallelepiped shape, and the air outlet 21 b has a substantially rectangular shape when viewed from the front side F. Further, the guide wall 31 is formed on a downstream side with respect to the air outlet 21 b of the tubular body 21, for guiding an airflow having passed through the air outlet 21b in an intended direction. Note that, a width of the guide wall 31 in a vertical direction (direction perpendicular to the drawing sheet) is substantially equal to a width of the tubular body 21 in the vertical direction. With those structures, air, which has flowed from an opening portion 21c of the tubular body 21 on a rear side (side opposite to the front side F), passes through the airflow passage 21a. The air is then blown from the opening portion (air outlet 21 b) on the front side F, and is guided (led) in the intended direction along the guide wall 31. The arrows in FIG. 1 indicate the flow of the air.

Note that, the amount of the air supplied to the embodiment device 10 (amount of the air flowing from the opening portion 21c of the embodiment device 10 on the rear side into the airflow passage 21 a, that is, flow rate of the airflow passing through the airflow passage 21 a and then the air outlet 21 b) may be adjusted by operating as necessary a flow rate adjustment valve (not shown) arranged inside or outside the embodiment device 10, a pump (not shown) for supplying air to the embodiment device 10, or the like.

The guide wall 31 has a wall surface 33 having a convex surface shape (curved surface having a convex shape). The wall surface 33 of the guide wall 31 protrudes in a direction intersecting with the forward direction F of the air outlet 21 b (extending direction of a straight line passing through a center point 21 b1 of an opening plane of the air outlet 21 b so as to be orthogonal to the opening plane). Specifically, the forward direction F of the air outlet 21 b is an extending direction of the axial line AX in FIG. 1, and the wall surface 33 of the guide wall 31 protrudes from the left side L to the right side R in FIG. 1.

Further, as illustrated in FIG. 2, the guide wall 31, specifically, the wall surface 33 is arranged so that a projection image PP, which is obtained by projecting the guide wall 31 (wall surface 33) onto an imaginary plane IP including the air outlet 21 b, covers the entire air outlet 21 b.

Therefore, when the user of the automobile or the like views the embodiment device 10 from the front side of the embodiment device 10 (that is, along the projection direction) as indicated by the line of sight in FIG. 2, the air outlet 21 b is hidden by the guide wall 31 so that the air outlet 21 b is not visually recognized by the user or the like.

Referring to FIG. 1 again, the on-off valve 32 is a plate body having a substantially rectangular shape in plan view. The on-off valve 32 is curved in conformity with the shape of the wall surface 33 of the guide wall 31 to form a part of the guide wall 31, specifically, a part of the wall surface 33. The on-off valve 32 is capable of opening or closing a concave portion 34 formed in the guide wall 31 by pivoting about a pivot axis 32a. In other words, the on-off valve 32 is supported on the guide wall 31 so as to be pivotable between a pivot angle at which the concave portion 34 is opened and a pivot angle at which the concave portion 34 is closed.

Note that, the on-off valve 32 is configured such that the pivot angle of the on-off valve 32 is operable by the user. For example, the on-off valve 32 is configured such that the pivot angle is operable by the user through intermediation of a link member (not shown), or that the pivot angle is operable through actuation of a motor (not shown) in accordance with an instruction from the user.

The concave portion 34 is a hollow portion having a shape recessed from the wall surface 33 of the guide wall 31 to an inside of the guide wall 31. The concave portion 34 has dimensions such as a depth and width that allow the on-off valve 32 to be pivotable as described above. Further, as illustrated in a partially enlarged view of FIG. 1, the concave portion 34 is formed so that an angle θ formed between a wall surface 33a of the guide wall, which is formed on an upstream side with respect to the concave portion 34 and adjacent to the concave portion 34, and a side surface 34a of the concave portion, which is adjacent to the wall surface 33a, becomes a predetermined angle smaller than 90° (acute angle).

The overview of the embodiment device 10 is described above.

### <Actual Actuation>

Next, actual actuation of the embodiment device 10 is described.

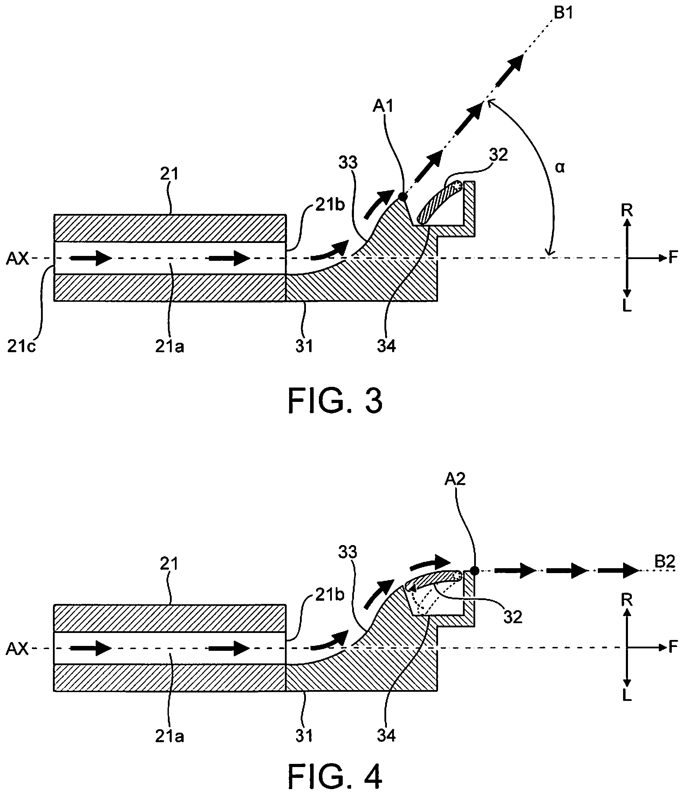

The embodiment device 10 is configured to adjust a flow direction of the blowing airflow by changing the pivot angle of the on-off valve 32 to change a separating position of the airflow. Now, the adjustment of the blowing airflow by the embodiment device 10 is described referring to FIG. 3 and FIG. 4. FIG. 3 and FIG. 4 are schematic sectional views for illustrating the embodiment device 10 when the embodiment device 10 is cut along the plane parallel to the axial line AX of the embodiment device 10 in the lateral direction similarly to FIG. 1. Note that, in FIG. 3 and FIG. 4, for the sake of convenience, the illustration of the peripheral components P1 and P2 is omitted.

As illustrated in FIG. 3, the airflow, which has flowed from the opening portion 21c of the embodiment device 10 on the rear side into the airflow passage 21 a, passes through the air outlet 21 b, and then flows along the wall surface 33 of the guide wall 31 due to the Coanda effect. As illustrated in FIG. 3, when the pivot angle of the on-off valve 32 is the "pivot angle at which the concave portion 34 is opened," the airflow, which has flowed along the wall surface 33 of the guide wall 31, faces the concave portion 34. At this time, an adhesive force obtained by the Coanda effect is lost in the concave portion 34 so that the airflow is separated from the wall surface 33 of the guide wall 31 at a position at which the concave portion 34 is formed (separating position A1). Then, the airflow is caused to flow in a tangential plane direction of the wall surface 33 of the guide wall 31 at the separating position A1 (tangential direction B1 in FIG. 3). As a result, the flow direction of the blowing airflow is adjusted to the rightward direction R of the embodiment device 10. As an indicator of the flow direction of the blowing airflow, for example, an angle formed between the axial line AX of the embodiment device 10 and the flow direction B1 of the blowing airflow is an angle α.

Next, as illustrated in FIG. 4, when the pivot angle of the on-off valve 32 is the "pivot angle at which the concave portion 34 is closed," the airflow having passed through the airflow passage 21 a is caused to flow along a surface of the on-off valve 32 without facing the concave portion 34. Then, the airflow is separated from the wall surface 33 of the guide wall 31 at a distal end portion (separating position A2) of the guide wall 31, which is formed on the downstream side with respect to the separating position A1. Then, the airflow is caused to flow in a tangential plane direction of the wall surface 33 of the guide wall 31 at the separating position A2 (tangential direction B2 in FIG. 4). As a result, the flow direction of the blowing airflow is adjusted to the forward direction F of the embodiment device 10. As an indicator of the flow direction of the blowing airflow, for example, an angle formed between the axial line AX of the embodiment device 10 and the flow direction B2 of the blowing airflow is an angle of 0°, which is smaller than the angle α (that is, the axial line AX and the flow direction B2 are parallel to each other).

As described above, the embodiment device 10 is capable of adjusting the flow direction (B1, B2) of the blowing airflow as well as changing the separating position (A1, A2) by opening or closing the on-off valve 32 forming a part of the wall surface 33 of the guide wall 31. Specifically, the embodiment device 10 is capable of switching the flow direction of the blowing airflow between the rightward direction R of the embodiment device 10 and the forward direction F thereof.

The actual actuation of the embodiment device 10 is described above.

As described above, the embodiment device 10 includes the tubular body 21, the guide wall 31, and the on-off valve 32, which are structured as described above. With this, the embodiment device 10 can adjust the flow direction of the blowing airflow while preventing the air outlet 21b from being visually recognized by the user (keeping the air outlet 21 b invisible).

### <Other Embodiments>

The present invention is not limited to the above-mentioned embodiment, and various modifications may be employed within the scope of the present invention.

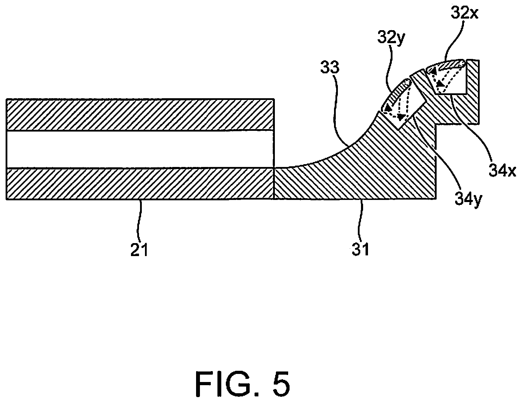

For example, the embodiment device 10 has a single concave portion 34 and a single on-off valve 32 in the guide wall 31. However, the number of the on-off valves 32 is not necessarily one. For example, as illustrated in FIG. 5, a plurality of the concave portions (two concave portions 34x and 34y in this embodiment) and a plurality of the on-off valves (two on-off valves 32x and 32y in FIG. 5) may be formed in the guide wall 31. With the plurality of the on-off valves, the flow direction of the blowing airflow can more precisely be adjusted than in the case where the single concave portion is formed.

Further, the embodiment device 10 is mounted inside a vehicle cabin of the automobile (inner panel). However, the air blowing device of the present invention may be mounted on another portion such as a pillar portion inside the vehicle cabin of the automobile. In addition, the air blowing device of the present invention is not limited to the one mounted inside the vehicle cabin of the automobile, and, for example, may be mounted to such various members that air supply and stop of the air supply are desired.

## Claims

1. An air blowing device (10), comprising:
a tubular body (21) defining an airflow passage (21a) and an air outlet (21b);
a guide wall (31) for guiding an airflow having passed through the air outlet in an intended direction; and
an on-off valve (32) forming a part of the guide wall, which is capable of opening or closing a concave portion (34) formed in the guide wall,
the on-off valve (32) being configured to open or close the concave portion (34) in accordance with the intended direction, **characterized in that** the guide wall (31) has a convex surface shape protruding in a direction intersecting with a forward direction (F) of the air outlet (21 b), and being arranged so that a projection image, which is obtained by projecting the guide wall (31) onto an imaginary plane (P1) including the air outlet (21 b), covers the entire air outlet (21b).

2. An air blowing device according to claim 1, wherein an angle (θ) formed between a surface (33a) of the guide wall (31), which is formed on an upstream side with respect to the concave portion (34) and adjacent to the concave portion, and a side surface (34a) of the concave portion, which is adjacent to the surface (33a) of the guide wall, is a right angle or an acute angle.

3. An air blowing device according to claim 1 or 2,
wherein the concave portion (34) comprises a plurality of concave portions (34x, 34y) formed in the guide wall (31) along a flow direction of the airflow, and
wherein the on-off valve (32) comprises a plurality of on-off valves (32x, 32y) capable of opening or closing the plurality of concave portions (34x, 34y) independently of each other.

## Patentansprüche

1. Luftblasvorrichtung (10), aufweisend:
einen rohrförmigen Körper (21), der einen Luftstromdurchlass (21a) und einen Luftauslass (21 b) definiert;
eine Führungswand (31) zum Führen eines Luftstroms, der durch den Luftauslass gelangt ist, in einer beabsichtigten Richtung; und
ein Ein-Aus-Ventil (32), das einen Teil der Führungswand bildet, das dazu fähig ist, einen in der Führungswand ausgebildeten konkaven Teil (34) zu öffnen oder zu schließen,
wobei das Ein-Aus-Ventil (32) dazu konfiguriert ist, den konkaven Teil (34) gemäß der beabsichtigten Richtung zu öffnen oder zu schließen, **dadurch gekennzeichnet, dass** die Führungswand (31) eine konvexe Oberflächenform hat, die in einer Richtung vorsteht, die sich mit einer Vorwärtsrichtung (F) des Luftauslasses (21 b) schneidet, und so angeordnet ist, dass ein Projektionsbild, das durch Projizieren der Führungswand (31) auf eine den Luftauslass (21) enthaltende imaginäre Ebene (P1) erhalten wird, den gesamten Luftauslass (21b) abdeckt.

2. Luftblasvorrichtung gemäß Anspruch 1, wobei ein Winkel (θ), der zwischen einer Oberfläche (33a) der Führungswand (31), die auf einer stromaufwärts liegenden Seite bezüglich des konkaven Teils (34) ausgebildet ist und dem konkaven Teil benachbart ist, und einer Seitenoberfläche (34a) des konkaven Teils, der der Oberfläche (33a) der Führungswand benachbart ist, eingeschlossen wird, ein rechter Winkel oder ein spitzer Winkel ist.

3. Luftblasvorrichtung gemäß Anspruch 1 oder 2,
wobei der konkave Teil (34) mehrere konkave Teile (34x, 34y) aufweist, die entlang einer Fließrichtung des Luftstroms in der Führungswand (31) ausgebildet sind, und wobei das Ein-Aus-Ventil (32) mehrere Ein-Aus-Ventile (32x, 32y) aufweist, die dazu fähig sind, die mehreren konkaven Teile (34x, 34y) unabhängig voneinander zu öffnen oder zu schließen.

## Revendications

1. Dispositif de soufflage d'air (10), comprenant :
un corps tubulaire (21) définissant un passage d'écoulement d'air (21a) et une sortie d'air (21b) ;
une paroi de guidage (31) pour guider un écoulement d'air étant passé à travers la sortie d'air dans une direction voulue ; et
une valve de marche-arrêt (32) formant une partie de la paroi de guidage, qui est capable d'ouvrir ou de fermer une portion concave (34) formée dans la paroi de guidage,
la valve de marche-arrêt (32) étant configurée pour ouvrir ou fermer la portion concave (34) conformément à la direction voulue, **caractérisé en ce que** la paroi de guidage (31) présente une forme convexe de surface faisant saillie dans une direction croisant une direction vers l'avant (F) de la sortie d'air (21b), et étant agencée pour qu'une image de projection, qui est obtenue en projetant la paroi de guidage (31) sur un plan imaginaire (P1) incluant la sortie d'air (21b), couvre la sortie d'air entière (21b).

2. Dispositif de soufflage d'air selon la revendication 1, dans lequel un angle (θ) formé entre une surface (33a) de la paroi de guidage (31), qui est formée sur un côté amont par rapport à la portion concave (34) et adjacente à la portion concave, et une surface latérale (34a) de la portion concave, qui est adjacente à la surface (33a) de la paroi de guidage, est un angle droit ou un angle aigu.

3. Dispositif de soufflage d'air selon la revendication 1 ou 2, dans lequel la portion concave (34) comprend une pluralité de portions concaves (34x, 34y) formées dans la paroi de guidage (31) le long d'une direction d'écoulement de l'écoulement d'air, et dans lequel la valve de marche-arrêt (32) comprend une pluralité de valves de marche-arrêt (32x, 32y) capables d'ouvrir ou de fermer la pluralité de portions concaves (34x, 34y) indépendamment les unes des autres.
